# EUROPÄISCHE PATENTSCHRIFT

(11) **EP 1 613 952 B1**
(45) Veröffentlichungstag und Bekanntmachung des Hinweises auf die Patenterteilung: **19.03.2008**
(21) Anmeldenummer: 04725266.3
(22) Anmeldetag: 02.04.2004
(51) Int. Cl.: G01N 30/20, F16K 11/074

(54) **ROTATIONSVENTIL**
ROTATING VALVE
VANNE ROTATIVE

(30) Priorität: 03.04.2003 CH 594032003
(43) Veröffentlichungstag der Anmeldung: 11.01.2006
(73) Patentinhaber: CS Analytics AG, 6375 Beckenried (CH)
(72) Erfinder: CUENI, Hansjörg, CH-6362 Stansstad (CH); SCHERRER, Heiner, CH-4227 Büsserach (CH); DÖBELIN, Werner, CH-4153 Reinach (CH)
(74) Vertreter: Braun, André jr.
(86) Internationale Anmeldenummer: PCT/CH2004/000207
(87) Internationale Veröffentlichungsnummer: WO 2004/088303

(56) Entgegenhaltungen:
- WO-A-02/12878
- US-A- 3 477 207
- US-A- 4 625 569
- PATENT ABSTRACTS OF JAPAN vol. 011, no. 252 (P-605), 15. August 1987 (1987-08-15) -& JP 62 056858 A (TOYO SODA MFG CO LTD), 12. März 1987 (1987-03-12)

## Beschreibung

Die Erfindung betrifft ein Rotationsventil für die Hochleistungs-Flüssigchromatographie (HPLC) mit einem Stator mit Anschlüssen für Lösungsmittelreservoire, Pumpen, Chromatographiesäulen etc. und von den Anschlüssen zu Mündungen in einer Kontaktfläche führenden Bohrungen, sowie einen scheibenförmigen Rotor mit stirnseitigen Verbindungsnuten zur wahlweisen Verbindung verschiedener Mündungen untereinander.

Ein Rotationsventil mit den im Oberbegriff von Anspruch 1 definierten Merkmalen ist aus der WO 02/12878 A bekannt.

Bei Ventilen für die Hochleistungs-Flüssigchromatographie werden, wie auch bei HPLC-Pumpen, seit langem grosse Anstrengungen unternommen, durch Verringerung von Umschalteffekten möglichst konstante Förderdrücke und Flussraten zu erreichen. Je kleiner die Flussraten werden, desto störender wirken sich die Einflüsse von Toträumen aus, die aber bei Ventilen nicht vollständig eliminiert werden können. Ebenso sind starke Druckpulsationen unerwünscht, die aber bei immer höheren Arbeitsdrücken infolge der Kompressibilität zunehmen. Beide Störungen wirken sich in Peakverbreiterungen und anderen die Messgenauigkeit und die Auflösung beeinträchtigenden Fehlern aus. Derzeit geforderte Flussraten liegen im Bereich von 10 nl bis 200 µl und gewünschte Drücke erreichen bereits bis zu 800 bar. Diese Anforderungen sind mit herkömmlichen Ventilen nicht mehr oder nur noch mit hohem Aufwand zufriedenstellend zu erreichen.

Der Erfindung liegt daher die Aufgabe zugrunde, ein Ventil bereitzustellen, mit dem diese negativen Auswirkungen mit vernünftigem Aufwand verringert werden können.

Erfindungsgemäss wird dies mit einem Ventil der eingangs genannten Art dadurch erreicht, dass die Mündungen in der Kontaktfläche gleichmässig auf zwei konzentrische Kreise verteilt und die Verbindungsnuten in der Rotorstirnfläche kreissegmentförmig ausgebildet und so angeordnet sind, dass in definierten Rotorpositionen auf jedem Kreis fünf Mündungen gleichzeitig miteinander verbunden sind.

Im folgenden werden anhand der beiliegenden Zeichnungen bevorzugte Ausführungsbeispiele der Erfindung beschrieben.
Es zeigen
- Fig. 1: eine schematische Darstellung eines Rotationsventils nach der Erfindung
- Fig. 2 - 6: ein binäres Gradientenpumpensystem mit einem erfindungsgemässen Ventil in verschiedenen Schaltpositionen

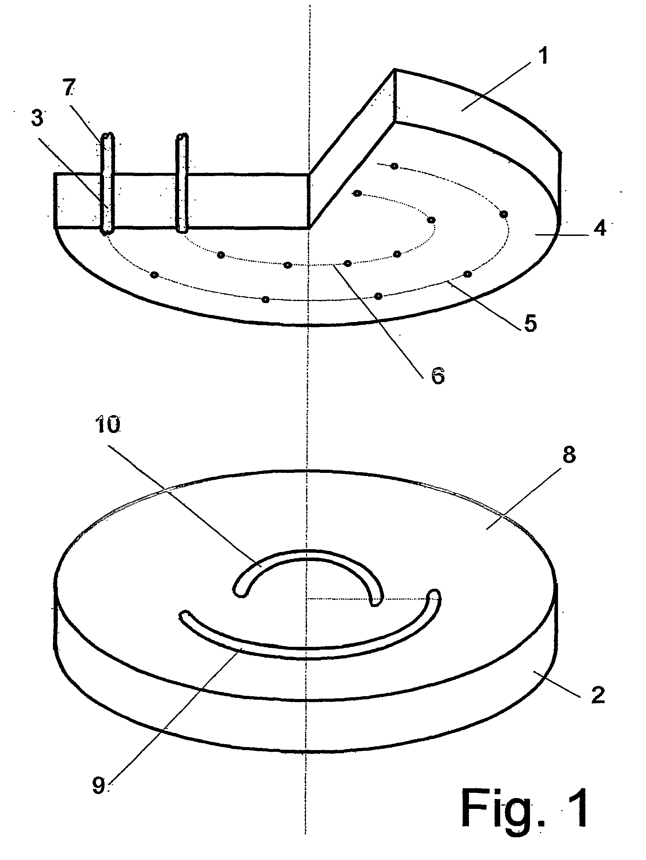

Das in Fig. 1 schematisch dargestellte Rotationsventil besteht im wesentlichen aus einem scheibenförmigen Stator 1 und einem ebenfalls scheibenförmigen Rotor 2. Im Stator sind insgesamt achtzehn durchgängige Bohrungen 3 so angeordnet, dass ihre Mündungen auf der dem Rotor zugewandten Kontaktfläche 4 gleichmässig auf zwei konzentrische Kreise 5, 6 verteilt sind. Auf der Rückseite sind Anschlüsse 7 für Verbindungsleitungen zu Pumpen, Lösungsmittelreservoire, Chromatographiesäulen etc. vorgesehen.

Der Rotor 2 besitzt auf seiner dem Stator zugewandten Stirnfläche 8 zwei kreissegmentförmige Nuten 9, 10, die sich im zusammengebauten Zustand des Ventils, wenn die Stirnfläche des Rotors gegen die Kontaktfläche des Stators gepresst ist, entlang den Kreisen erstrecken, auf denen die Mündungen der Bohrungen 3 liegen. Die Länge der Nuten ist so bemessen, dass jede auf dem ihr entsprechenden Kreis fünf Bohrungsmündungen gleichzeitig miteinander verbinden kann.

Bei neun Bohrungsmündungen pro Kreis beträgt der Winkelabstand zwischen zwei Mündungen 40°, so dass die Nuten zur Verbindung von fünf Mündungen sich über einen Winkel von ca. 160° erstrecken müssen. Sie sind so angeordnet, dass jede von ihnen ein Ende an einer gemeinsamen Winkelposition hat, von wo sich eine im Uhrzeigersinn, die andere im Gegenuhrzeigersinn erstreckt.

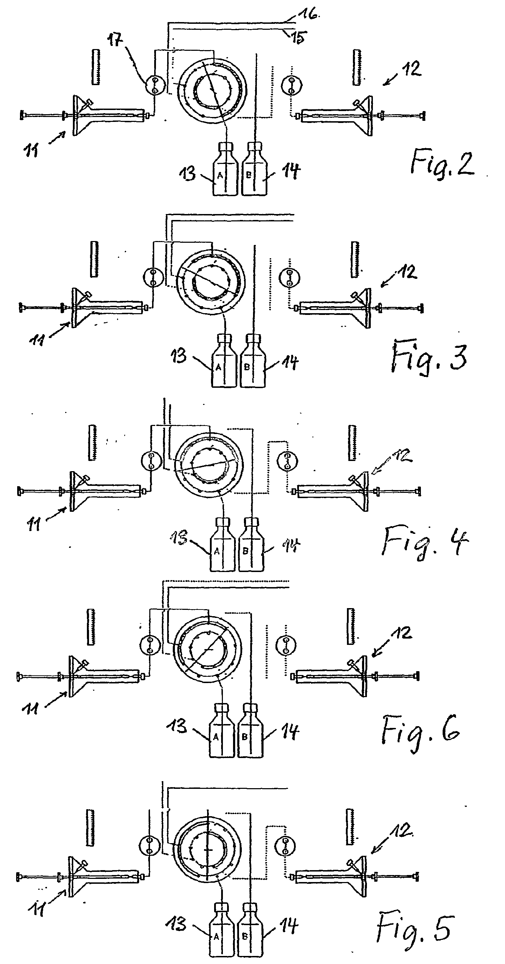

In der in Fig. 2 gezeigten Konfiguration ist das in schematischer Draufsicht dargestellte Ventil mit zwei Kolbenpumpen 11, 12, zwei Lösungsmittelreservoire 13, 14 und zwei Ausgängen 15, 16 zu einem Gradientensystem für die Lösungsmittelzuführung zu einer Chromatographiesäule verbunden. An dem in der Winkelposition 0° befindliche Anschluss des äusseren Kreises 5 ist eine Pumpe 11 für das im Reservoir 13 enthaltene Lösungsmittel A angeschlossen. Der entsprechende 0°-Anschluss des inneren Kreises ist mit dem anderen Reservoir 14 mit dem Lösungsmittel B verbunden. Das zweite Reservoir 13 mit dem Lösungsmittel A ist mit dem in Winkelposition 160° befindlichen Anschluss des äusseren Kreises verbunden. An den entsprechenden Anschluss des inneren Kreises ist die zweite Pumpe 12 für das Lösungsmittel B angeschlossen. Schliesslich führt vom äusseren Kreis der Anschluss bei 280°, vom inneren Kreis der Anschluss bei 240° zum Ausgang in Richtung der Säule. Diese beiden Ausgänge werden wie üblich in einem Mixer (nicht gezeigt) zusammengeführt.

In der gezeigten Position des Rotors ist durch die äussere Nut 9 der Anschluss der Pumpe 11 für das Lösungsmittel A mit dem Anschluss für das entsprechende Reservoir 13 verbunden. Die Pumpe 11 kann also in dieser Position das Lösungsmittel A ansaugen. Gleichzeitig ist durch die innere Nut 10 der Anschluss für die andere Pumpe 12 für das Lösungsmittel B mit dem Anschluss für den entsprechenden Ausgang 16 verbunden. Diese Pumpe kann also in dieser Rotorposition das in ihr enthaltene Lösungsmittel B in Richtung Ausgang bzw. Säule fördern.

Zwischen den Pumpen und den jeweiligen Ventilanschlüssen sind hochempfindliche Drucksensoren 17 angeordnet, deren Signale für die Pumpen- und Ventilsteuerung verwendet werden.

Fig. 3 zeigt dieselbe Anordnung, in welcher der Rotor nach dem Ende des Ansaugvorganges der Pumpe 11 um eine Winkelposition im Gegenuhrzeigersinn gedreht ist. In die äussere Nut 9 mündet nun ausser dem Pumpenanschluss kein anderer Anschluss, so dass die Pumpe 11 das vorher angesaugte Lösungsmittel A komprimieren kann, bis der erforderliche bzw. erwünschte Förderdruck erreicht ist. Für das Lösungsmittel B hat sich durch die Umschaltung nichts geändert. Die andere Pumpe 12 ist über die Nut 10 nach wie vor mit dem Ausgang 16 verbunden und fördert gleichmässig weiter.

Wenn das Lösungsmittel A den gewünschten Druck erreicht hat und die Förderung beider Lösungsmittel beginnen soll wird der Rotor um einen weitere Winkelschritt im Gegenuhrzeigersinn in die in Fig. 4 gezeigte Position gedreht. In dieser Position sind beide Pumpen mit den beiden Ausgängen verbunden. Das Mischungsverhältnis der beiden Lösungsmittel wird über den Vortrieb der beiden Pumpen gesteuert.

Wenn die Förderung des Lösungsmittels B durch die Pumpe 12 beendet ist und nur noch Lösungsmittel A gefördert wird, wird der Rotor um zwei Winkelschritte im Gegenuhrzeigersinn in die in Fig. 5 gezeigte Position gedreht. In dieser Position ist die Pumpe 11 über die äussere Nut 9 unverändert mit dem Ausgang 15 verbunden, während die innere Nut 10 die Pumpe 12 mit dem Reservoir 14 des Lösungsmittels B verbindet. Die Pumpe 12 kann sich jetzt wieder mit Lösungsmittel B füllen.

Durch Rotordrehungen zurück, d.h. im Uhrzeigersinn erfolgen die entsprechenden Schritte in umgekehrter Reihenfolge. Nach Beendigung des Füllvorganges wird der Rotor um einen Winkelschritt im Uhrzeigersinn gedreht. In dieser in Fig. 6 gezeigten Position verbindet die innere Nut keine Anschlüsse, so dass die Pumpe 12 das Lösungsmittel auf den gewünschten Förderdruck vorkomprimieren kann. Für Pumpe 11 hat sich immer noch nichts geändert, d.h. sie kann weiterhin gleichmässig fördern. Es erfolgen weitere Rotordrehungen im Uhrzeigersinn, bis wieder die Situation gemäss Fig. 2 erreicht ist.

## Patentansprüche

1. Rotationsventil für die Hochleistungs-Flüssigchromatographie mit einem Stator (1) mit Anschlüssen (7) für Lösungsmittelreservoire, Pumpen, Chromatographiesäulen und von den Anschlüssen (7) zu Mündungen in einer Kontaktfläche führenden Bohrungen (3), sowie einen scheibenförmigen Rotor (2) mit stirnseitigen Verbindungsnuten (9, 10) zur wahlweisen Verbindung verschiedener Anschlüsse (7) untereinander, **dadurch gekennzeichnet, dass** die Mündungen in der Kontaktfläche gleichmässig auf zwei konzentrische Kreise (5, 6) verteilt und die Verbindungsnuten (9, 10) in der Rotorstirnfläche kreissegmentförmig ausgebildet und so angeordnet sind, dass in definierten Rotorpositionen auf jedem Kreis (5, 6) fünf Anschlüsse gleichzeitig miteinander verbunden sind.

## Claims

1. Rotating valve for high performance liquid chromatography, comprising a stator (1) having connections (7) for solvent reservoirs, pumps, chromatography columns and bores (3) leading from the connections (7) to mouths in a contact surface, and a disc-like rotor (2) having connecting grooves (9,10) in the end face for alternate connection of different connections (7) to one another, **characterized in that** the mouths in the contact surface are distributed uniformly over two concentric circles (5,6) and the connecting grooves (9, 10) in the end face of the rotor are in the form of a segment of a circle and are arranged so that five connections are connected to one another simultaneously in defined rotor positions on each circle (5,6).

## Revendications

1. Vanne rotative pour la chromatographie liquide haute performance comprenant un stator (1) avec des raccordements (7) pour des réservoirs de solvants, des pompes, des colonnes chromatographiques et des trous (3) qui mènent des raccordements (7) à des embouchures dans une surface de contact, ainsi qu'un rotor en forme de disque (2) avec des rainures de liaison (9, 10) frontales pour la liaison au choix de différents raccordements (7) entre eux, **caractérisée en ce que** les embouchures dans la surface de contact sont distribuées de manière régulière sur deux cercles concentriques (5, 6) et les rainures de liaison (9, 10) dans la surface frontale du rotor sont formées en segment circulaire et disposées de telle manière que dans des positions de rotor définies, cinq raccordements peuvent être reliés ensemble en même temps sur chaque cercle (5, 6).
